# EUROPEAN PATENT APPLICATION

(11) **EP 4 744 947 A2**
(43) Date of publication of application: **20.05.2026**
(21) Application number: 25209528.6
(22) Date of filing: 17.10.2025
(51) Int. Cl.: B60L 53/16, B60L 58/12, B60L 55/00, H01R 13/639, H02J 3/32

(54) **VEHICLE**

(30) Priority: 13.11.2024 JP 2024198140
(71) Applicant: TOYOTA JIDOSHA KABUSHIKI KAISHA, Toyota-shi, Aichi-ken 471-8571 (JP)
(72) Inventor: SAKAKIBARA, Naoya, Toyota-shi, 471-8571 (JP)
(74) Representative: D Young & Co LLP

(57) **Abstract**

An aggregator uses, as a power adjustment resource, a battery (11) mounted in a vehicle (10). An inlet (12) of the vehicle is connectable with a connector (25) of a DR-compatible EVSE (20) that uses the vehicle as a power adjustment resource and with a connector (45) of a non-DR-compatible EVSE (40) that does not uses the vehicle as a power adjustment resource. A lock device (300) enters a locked state in which the connector cannot be removed from the inlet when the connector is connected to the inlet. A controller (15) of the vehicle sets a lock release condition to "during user's operation" (S24) when the connector of the DR-compatible EVSE is connected to the inlet and sets the lock release condition to "upon completion of charging" when the non-DR-compatible EVSE is connected to the inlet.

## Description

### CROSS REFERENCE TO RELATED APPLICATIONS

This nonprovisional application is based on Japanese Patent Application No. 2024-198140 filed on November 13, 2024 with the Japan Patent Office, the entire contents of which are hereby incorporated by reference.

### BACKGROUND

### Field

The present disclosure relates to a vehicle.

### Description of the Background Art

For example, Japanese Patent Laying-Open No. 2021-22969 discloses that a charging cable of a charging and discharging stand is connected to a vehicle to charge a battery mounted in the vehicle or supply electric power discharged from the battery to the charging and discharging stand.

### SUMMARY

In recent years, a virtual power plant (VPP) that uses a vehicle as an energy resource has been used for leveling of electric power supply and demand. For example, by using a vehicle with an in-vehicle power storage device as a power adjustment resource, electric power can be stored in the power storage device of the vehicle during a period in which electric power supply exceeds electric power demand, and electric power stored in the power storage device of the vehicle can be discharged during a period in which electric power demand exceeds electric power supply, thereby leveling electric power supply and demand.

When the vehicle is used as a power adjustment resource as described above, the vehicle needs to be connected to a power grid (power network). The vehicle is connected to the power grid via electric vehicle supply equipment (EVSE). An operator (aggregator) that provides energy management services by bringing together a plurality of power adjustment resources such as those in a region or at a predetermined facility obtains information on each vehicle connected to the power grid and creates, for example, a charging and discharging plan.

When a connector of the EVSE is inserted into an inlet of the vehicle, a lock device is provided that fixes the connector to prevent the connector from being removed from the inlet. When the lock device enters a locked state, the connector enters a locked state in which it cannot be removed from the inlet. When the lock device enters an unlocked state, the connector can be removed from the inlet.

Some EVSEs do not use a vehicle as a power adjustment resource. Hereinafter, the EVSE that uses the vehicle as a power adjustment resource is also referred to as demand response (DR)-compatible EVSE, and the EVSE that does not use the vehicle as a power adjustment resource is also referred to as non-DR-compatible EVSE. The non-DR-compatible EVSE is generally not managed by an aggregator.

From the perspective of convenience, the lock device should preferably enter the unlocked state when charging or discharging of the vehicle (power storage device) is complete. This allows the user to remove the connector from the inlet without performing a lock release operation after charging or discharging is complete, enabling the vehicle to travel. However, when the lock device enters the unlocked state after charging or discharging is complete, the connector may be accidentally removed from the inlet even when, for example, the vehicle is not scheduled to travel. When the connector of the DR-compatible EVSE is removed from the inlet, the vehicle cannot be used as a power adjustment resource. The power adjustment resource becomes larger as more vehicles are connected to the power grid, and thus, electric power (adjustment capability) for leveling of electric power supply and demand can be increased.

### SUMMARY

An object of the present disclosure is to achieve both convenience and adjustment capability.

A vehicle of the present disclosure is a vehicle including a power storage device. The vehicle includes an inlet connectable with a connector of a power feeding facility, a lock device that brings, when the connector is fitted with the inlet, the connector into a locked state in which the connector is unable to be removed from the inlet, and a controller. When the power feeding facility is a first power feeding facility that does not use the vehicle as a power adjustment resource, the controller releases the locked state upon completion of charging of the power storage device by the power feeding facility. When the power feeding facility is a second power feeding facility that uses the vehicle as a power adjustment resource, after completion of the charging of the power storage device by the power feeding facility or after completion of discharging of the power storage device, the controller maintains the locked state until a lock release operation is performed by a user.

With this configuration, when the connector of the power feeding facility is fitted with the inlet of the vehicle, the lock device enters the locked state. In the locked state, the connector cannot be removed from the inlet. When the power feeding facility is the first power feeding facility that does not use the vehicle as a power adjustment resource, the controller releases the locked state of the lock device upon completion of charging of the power storage device by the power feeding facility. When the power feeding facility is the second power feeding facility that uses the vehicle as a power adjustment resource, after completion of the charging of the power storage device by the power feeding facility or after completion of the discharging of the power storage device, the controller maintains the locked state of the lock device until the lock release operation is performed by the user.

When the power feeding facility is the first power feeding facility, the locked state is released upon completion of charging, allowing the user to remove the connector from the inlet without performing the lock release operation, leading to improved convenience. When the power feeding facility is the second power feeding facility, after completion of charging or after completion of discharging, the locked state can be maintained until the user performs the lock release operation, thereby preventing the connector from being accidentally removed from the inlet and increasing a probability that the vehicle will be used as a power adjustment resource. Thus, both convenience and adjustment capability can be achieved.

Preferably, when the power feeding facility is the second power feeding facility, the controller may notify a server of fitting information on fitting between the connector and the inlet, the server creating a charging and discharging plan based on power adjustment.

When the vehicle is used as a power adjustment resource, the vehicle needs to be connected to the power grid (power network). Additionally, a server managed by an operator (aggregator) that provides energy management services by bringing together a plurality of power adjustment resources such as those in a region or a predetermined facility needs to identify a vehicle connected to the power grid in order to create a charging and discharging plan based on power adjustment.

With this configuration, when the power feeding facility is the second power feeding facility, the controller notifies the server managed by the aggregator of the fitting information on fitting between the connector and the inlet, enabling the server to identify the vehicle connected to the second power feeding facility.

Preferably, when the connector is removed from the inlet to enter an unfitted state, the controller may provide a notification of the unfitted state.

With this configuration, the server receives a notification when the connector is removed from the inlet to enter the unfitted state, and thus, for example, when creating the charging and discharging plan, can exclude a vehicle that is not connected to the second power feeding facility from power adjustment resource targets, thus preferably creating the charging and discharging plan.

Preferably, the controller may enter a sleep state after completion of the charging and after completion of the discharging. The controller may be activated when the locked state is released by the user's lock release operation in the sleep state.

With this configuration, the controller enters the sleep state after completion of charging and after completion of discharging, and thus, power consumption can be reduced. When the controller is in the sleep state, the controller cannot detect the unfitted state even when the connector has been removed from the inlet and has entered the unfitted state. When the locked state is released by the lock release operation, the controller is activated from the sleep state. When the controller is activated, it can detect that the connector has been removed from the inlet and has entered the unfitted state, and can thus notify the server of the unfitted state. Thus, when creating the charging and discharging plan, the server can exclude a vehicle that is not connected to the second power feeding facility from power adjustment resource targets, thus preferably creating the charging and discharging plan.

Preferably, the controller may notify the server of the fitting information via the second power feeding facility.

With this configuration, the fitting information can be notified using communication between the second power feeding facility and the server.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a schematic overall configuration of a power management system according to the present embodiment.
Fig. 2 illustrates a schematic configuration of a vehicle of the present embodiment.
Fig. 3 illustrates an example appearance of a connector.
Fig. 4 is a flowchart showing an example connector fitting information notification process performed by a controller (charging control ECU).
Fig. 5 is a schematic circuit configuration diagram of the connector and an inlet.
Fig. 6 is a flowchart showing an example lock release condition setting process performed by the charging control ECU.
Fig. 7 is a timing chart when DR-compatible EVSE is connected to the vehicle in the present embodiment.
Fig. 8 is a timing chart when DR-compatible EVSE is connected to a vehicle in a comparative example.

### DESCRIPTION OF THE PREFERRED EMBODIMENTS

An embodiment of the present disclosure will be described in detail with reference to the drawings. In the drawings, the same or corresponding components have the same reference characters allotted, and description thereof will not be repeated.

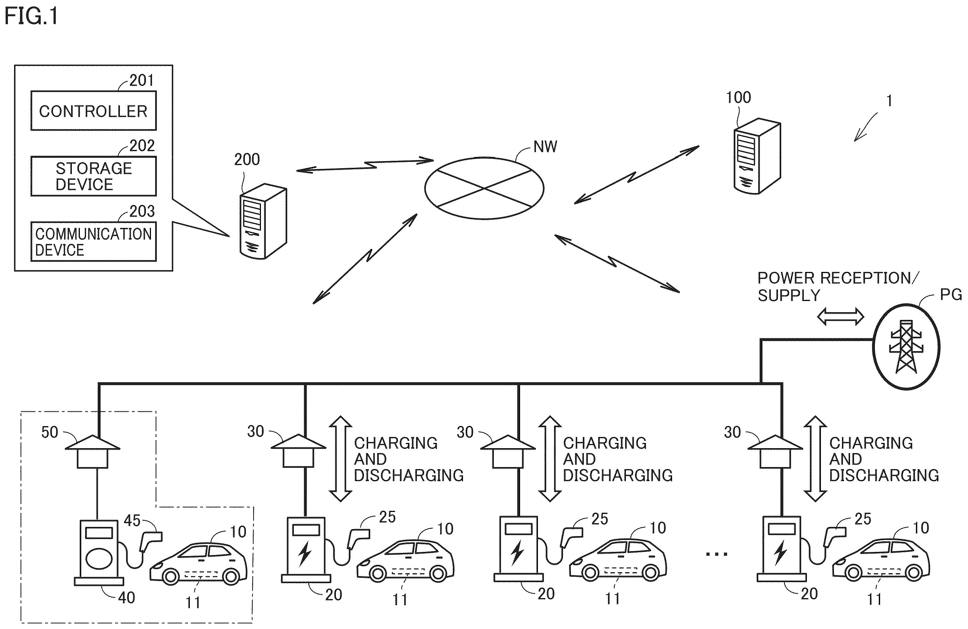

Fig. 1 shows a schematic overall configuration of a power management system according to the present embodiment. Referring to Fig. 1, a power management system 1 includes a power grid PG, a plurality of vehicles 10, a server 100, and a server 200.

Power grid PG, which is a power network constructed by power plants (not shown) and power transmission and distribution facilities (not shown), is maintained and managed by a power company. The power company corresponds to the manager of power grid PG. Server 100, which is managed by an aggregation coordinator, distributes a power adjustment amount to a resource aggregator in response to a request from the power company.

Server 200, which is a computer that manages the plurality of vehicles 10, is managed by the resource aggregator. Each of the plurality of vehicles 10, which is a battery electric vehicle (BEV), for example, includes a battery 11. Each vehicle 10 is used as a power adjustment resource and is configured to be able to perform external charging and external discharging. In the present embodiment, each vehicle 10 included in power management system 1 has the same configuration. However, power management system 1 may include a plurality of types of vehicles with different configurations.

A plurality of EVSEs 20 are charging and discharging facilities installed within the premises of facilities 30 (e.g., residence, commercial facility, etc.). EVSE 20 may be, for example, a power feeding facility compatible with vehicle to home (V2H) or vehicle to grid (V2G). EVSE 20 charges battery 11 with electric power supplied from power grid PG and feeds (discharges) the electric power stored in battery 11 to an electrical load of the residence or each facility. Additionally, EVSE 20 is capable of supplying the electric power stored in battery 11 to power grid PG (reverse power flow). As the connector of a charging and discharging cable connected to EVSE 20 is connected to an inlet of vehicle 10, electric power can be transferred between EVSE 20 and vehicle 10. EVSE 20, which is a power feeding facility that uses vehicle 10 as a power adjustment resource, is also referred to as DR-compatible EVSE 20. DR-compatible EVSE 20 corresponds to an example of the "second power feeding facility" in the present disclosure.

An EVSE 40 is a charging and discharging facility installed within the premises of a facility 50 (e.g., residence, commercial facility, etc.). EVSE 40 charges battery 11 with electric power supplied from power grid PG. The connector of the charging cable connected to EVSE 40 is connected to the inlet of vehicle 10, enabling charging of vehicle 10 (battery 11). EVSE 40, which is a power feeding facility that does not use vehicle 10 as a power adjustment resource, is also referred to as non-DR-compatible EVSE 40. Non-DR-compatible EVSE 40 corresponds to an example of the "first power feeding facility" in the present disclosure. Fig. 1 shows one non-DR-compatible EVSE 40, but a plurality of non-DR-compatible EVSEs 40 may be installed.

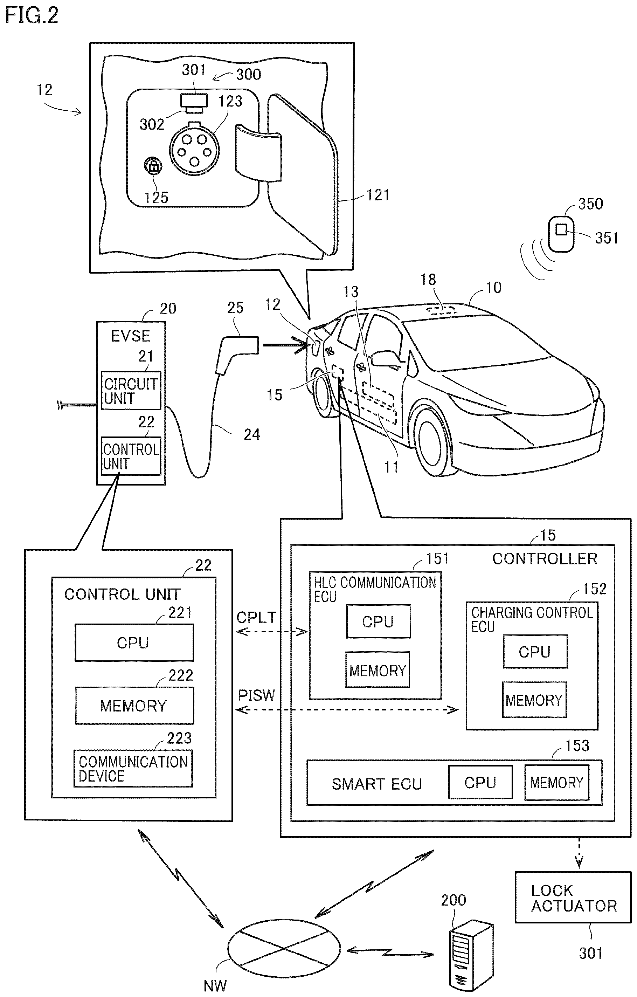

Fig. 2 illustrates a schematic configuration of vehicle 10 of the present embodiment. Vehicle 10 includes a battery 11, an inlet 12, a charging and discharging circuit 13, a controller 15, and a communication device 18. Vehicle 10 is an electrically powered vehicle (xEV) configured to be able to travel using electric power stored in battery 11. Battery 11 is an example of the "power storage device" in the present disclosure and may be a known power storage device (such as a liquid secondary battery, an all-solid-state secondary battery, or a battery assembly) for a vehicle.

Inlet 12 includes a charging port 123 and a charging lid 121. Charging lid 121 is configured to be openable and closable by the user, and covers charging port 123 when it is closed and exposes charging port 123 when it is open. When battery 11 is charged, with charging lid 121 being open, a connector 25 of a charging and discharging cable 24 is connected to charging port 123. Charging and discharging circuit 13 charges battery 11 using electric power supplied from outside the vehicle to charging port 123. Additionally, charging and discharging circuit 13 discharges electric power stored in battery 11 to outside the vehicle. Charging and discharging circuit 13 is controlled by controller 15. Charging and discharging circuit 13 may also charge or discharge battery 11 in response to a command from the outside of the vehicle (e.g., a command from DR-compatible EVSE 20). Hereinafter, charging and discharging of battery 11 mounted in vehicle 10 may also be referred to as charging and discharging of vehicle 10.

Controller 15 includes a high level communication (HLC) communication electronic control unit (ECU) 151, a charging control ECU 152, and a smart ECU 153. Each of HLC communication ECU 151, charging control ECU 152, and smart ECU 153 includes a central processing unit (CPU) and a memory. Controller 15 (e.g., charging control ECU 152) communicates with servers 100, 200 via communication device 18. Communication device 18 may include a wireless communication device (e.g., data communication module (DCM)) that can access a network NW.

DR-compatible EVSE 20 includes a circuit unit 21 and a control unit 22. DR-compatible EVSE 20 further includes charging and discharging cable 24 extending outward from the body of EVSE 20. Control unit 22 includes a CPU 221, a memory 222, and a communication device 223, and controls circuit unit 21. Circuit unit 21 includes, for example, a power conversion circuit, which includes a circuit for charging battery 11 with electric power supplied from power grid PG, and a circuit for feeding (discharging) electric power stored in battery 11 to the electrical load in the residence or facility. DR-compatible EVSE 20 may be capable of supplying electric power stored in battery 11 to power grid PG (reverse power flow).

A connector (plug) 25 that can be attached to and detached from charging port 123 of inlet 12 is provided at the tip of charging and discharging cable 24. As connector 25 of DR-compatible EVSE 20 is connected to inlet 12 of vehicle 10 that is parked, vehicle 10 is electrically connected to DR-compatible EVSE 20 (plugged-in state). DR-compatible EVSE 20 is electrically connected to power grid PG. Thus, vehicle 10 in the plugged-in state is electrically connected to power grid PG.

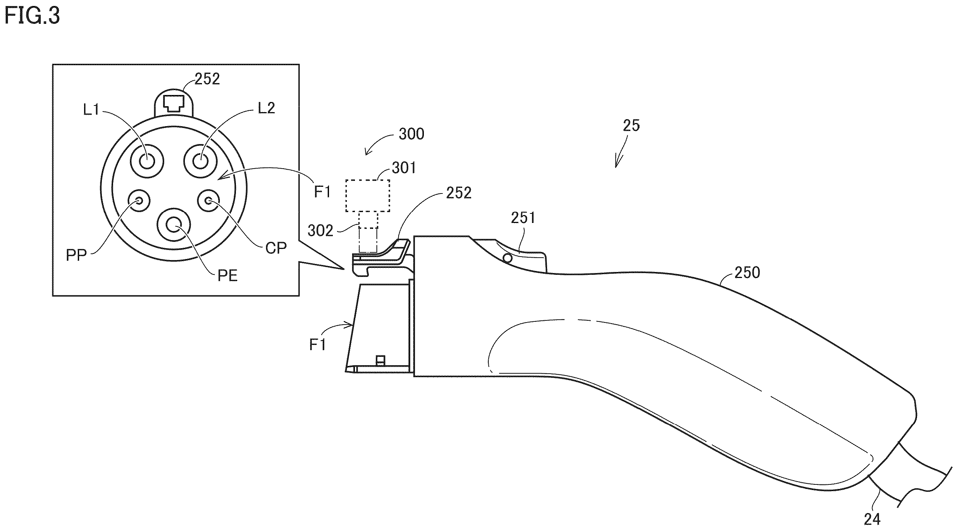

Fig. 3 illustrates an example appearance of connector 25. Connector 25 has connector terminals formed on an end face F1 of a body 250, and end face F1 is connected to charging port 123 of inlet 12. End face F1 has the connector terminals. The connector terminals provided on end face F1 include a terminal L1, a terminal L2, a terminal PE, a terminal PP, and a terminal CP. Charging port 123 of inlet 12 is provided with inlet terminals similar to the connector terminals provided on end face F1. Terminals L1, L2 are terminals to which electric power is supplied. For example, terminals L1, L2 may be hot terminals or cold terminals for alternating-current (AC) power and may be positive terminals or negative terminals for direct-current (DC) power. Terminal PE is a ground (GND) terminal.

Terminal PP is a terminal (hereinafter also referred to as "PISW") for detection (proximity detection) of the state (connected state/fitted state/unfitted state) between connector 25 and inlet 12. Hereinafter, the state between connector 25 and inlet 12 is also referred to as the "connector state". Terminal PP outputs a potential signal (PISW signal) indicating the connector state to the vehicle 10 side. The potential of the PISW signal may also be referred to as a "PISW potential". Terminal CP corresponds to a terminal (hereinafter also referred to as "CPLT") for a CPLT signal defined in, for example, standard "IEC/TS 62763:2013". The CPLT signal is a pulse width modulation (PWM) signal used for communication between vehicle 10 and DR-compatible EVSE 20. Additionally, HLC communication can be performed using a signal superimposed on the CPLT signal.

Connector 25 further includes a latch release button 251 and a latch 252. Latch release button 251 has the function of releasing latching of connector 25 to inlet 12 or causing vehicle 10 (e.g., charging control ECU 152) to detect the connector state (connected state/fitted state/unfitted state). Latch 252 is configured to engage with inlet 12 to fix (latch) connector 25 to inlet 12. For example, connector 25 is fixed as the tip of latch 252 is caught in (engaged with) a recess formed in inlet 12. Latch 252 operates in conjunction with latch release button 251. When latch release button 251 is pressed by the user, the engagement between the recess formed in inlet 12 and latch 252 is released (the fixation is released), allowing connector 25 to be removed from inlet 12.

When the user inserts connector 25 into inlet 12 without pressing latch release button 251 to fit connector 25 with inlet 12 (charging port 123), connector 25 and inlet 12 are fixed by latch 252 while being electrically connected to each other. This connector state is the "connected state". In the connected state, connector 25 is inserted into inlet 12, all the terminals of both are electrically connected, and connector 25 is latched. When the user presses latch release button 251 in the connected state, the fixation by latch 252 is released. This connector state is the "fitted state". In the fitted state, connector 25 is inserted into inlet 12, and all the terminals of both are electrically connected, but connector 25 is not latched. When the user removes connector 25 from inlet 12 in the fitted state, the connector state becomes the "unfitted state". The unfitted state is the state in which connector 25 is not fitted with inlet 12 (the state in which connector 25 is removed from inlet 12). When the connector state is the connected state or the fitted state, controller 15 prohibits travel of vehicle 10.

A lock device 300 is provided in inlet 12 (see Fig. 2). Lock device 300 includes an actuator 301 and an advancing/retreating rod 302. Actuator 301 is controlled by charging control ECU 152 and smart ECU 153 to cause advancing/retreating rod 302 to advance or retreat. Lock device 300 brings connector 25 into the locked state in which it cannot be removed from inlet 12 when connector 25 is fitted with inlet 12. When connector 25 is fitted with inlet 12 and the connector state becomes the connected state, advancing/retreating rod 302 protrudes from the position indicated by the dashed line as indicated by the alternate long and short dash line in Fig. 3 and abuts on latch 252. The position at which advancing/retreating rod 302 abuts on latch 252 is also referred to as the locked position. When advancing/retreating rod 302 is in abutment on latch 252, latch 252 cannot move in the direction in which engagement with the recess formed in inlet 12 is released. Consequently, even when latch release button 251 is pressed, the engagement between the recess formed in inlet 12 and latch 252 cannot be released, resulting in the locked state in which connector 25 cannot be removed from inlet 12.

When actuator 301 of lock device 300 returns advancing/retreating rod 302 to the position indicated by the dashed line in Fig. 3, as the user presses latch release button 251, the engagement between the recess formed in inlet 12 and latch 252 is released, allowing connector 25 to be removed from inlet 12. This state is referred to as the unlocked state, and the position of advancing/retreating rod 302 in the unlocked state is also referred to as the unlocked position. The unlocked state is the state in which the locked state is released.

In non-DR-compatible EVSE 40, a connector 45 provided at the tip of the charging cable has a similar configuration to that of connector 25 of DR-compatible EVSE 20. Connector terminals similar to those of connector 25 are provided on the end face of the body of connector 45. Connector 45, similarly to connector 25, includes a latch release button and a latch. Connector 45, similarly to connector 25, is brought into the locked state by lock device 300 in which connector 45 cannot be removed from inlet 12. Non-DR-compatible EVSE 40, similarly to DR-compatible EVSE 20, includes a circuit unit and a control unit. The circuit unit of non-DR-compatible EVSE 40 includes a power conversion circuit and charges battery 11 with electric power supplied from power grid PG. The control unit of non-DR-compatible EVSE 40 controls a charging current or the like. Also in non-DR-compatible EVSE 40, the connector state, similarly to DR-compatible EVSE 20, includes the "connected state", the "fitted state", and the "unfitted state".

Referring to Fig. 1, server 200 includes a controller 201, a storage device 202, and a communication device 203. Similarly, server 100 includes a controller, a storage device, and a communication device. Server 100 and server 200 are configured to be able to communicate with each other via network NW. Server 200 is configured to be able to communicate with vehicle 10 and DR-compatible EVSE 20 via network NW. Server 100 may also be configured to be able to communicate with vehicle 10 and DR-compatible EVSE 20 via network NW. Server 100 managed by the aggregation coordinator distributes a power adjustment amount to server 200 managed by the resource aggregator in response to, for example, a request from the power company to maintain the supply-demand balance of electric power supplied from power grid PG. Server 200 issues a demand response (DR) request to DR-compatible EVSE 20 and vehicle 10, and uses vehicle 10 as a power adjustment resource by charging and discharging of battery 11 mounted in vehicle 10.

Distribution (DR request) of the power adjustment amount transmitted from server 100 to server 200 includes a period of time (date and time) in which DR is performed and requested charging and discharging power, which is charging and discharging power in each period, for example, every 30 minutes. When the DR request is an increase DR, controller 201 creates, for example, a charging and discharging plan for charging vehicle 10 connected (in the plugged-in state) to DR-compatible EVSE 20 so as to increase power consumption of a power adjustment resource. When the DR request is a decrease DR, controller 201 creates, for example, a charging and discharging plan for discharging vehicle 10 connected (in the plugged-in state) to DR-compatible EVSE 20.

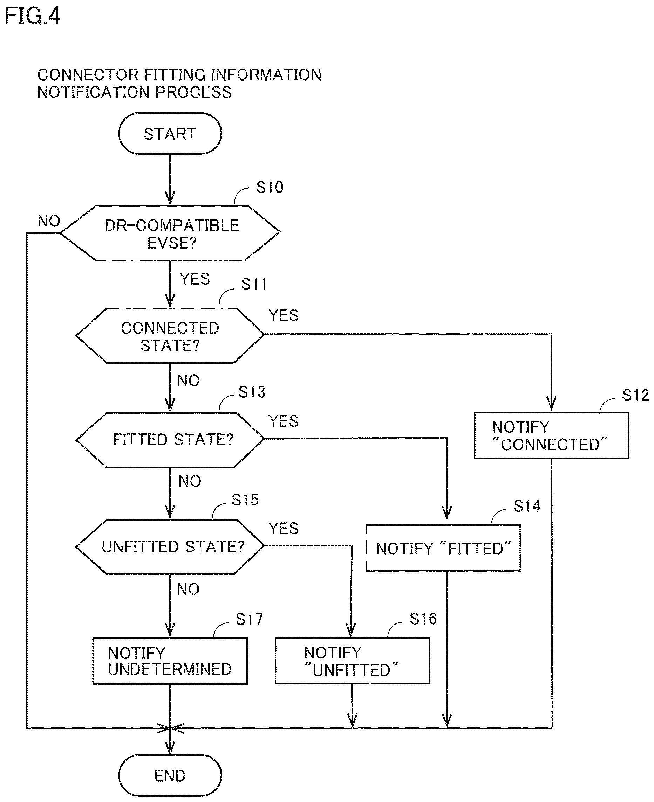

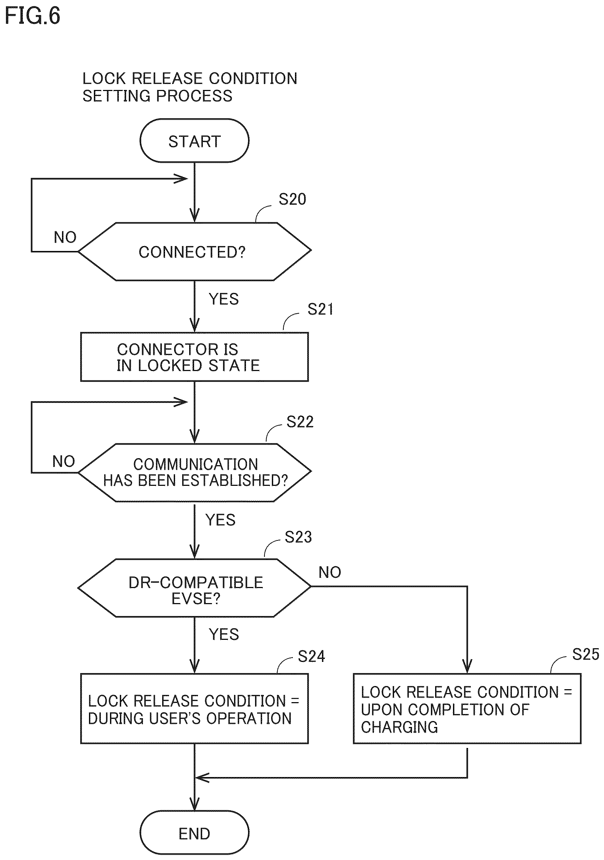

In order for server 200 to create the charging and discharging plan, server 200 has to detect vehicle 10 connected to DR-compatible EVSE 20 (has to obtain information on vehicle 10 in the plugged-in state). Fig. 4 is a flowchart showing an example connector fitting information notification process performed by controller 15 (charging control ECU 152). This flowchart is repeatedly processed, for example, for each predetermined period during activation of charging control ECU 152. In step (hereinafter, a step will be abbreviated as "S") 10, it is determined whether the EVSE connected with vehicle 10 is DR-compatible EVSE 20. In the present embodiment, the determination result of S23 in the "lock release condition setting process" (Fig. 6) described later is used. Details will be described later. When it is determined in S10 that vehicle 10 is connected to DR-compatible EVSE 20, the process proceeds to S11. When vehicle 10 is not connected to DR-compatible EVSE 20, the determination is negative, and the current routine ends.

In S11, it is determined whether connector 25 is inserted into inlet 12 and whether the connector state is the connected state. The connector state is detected based on the PISW signal.

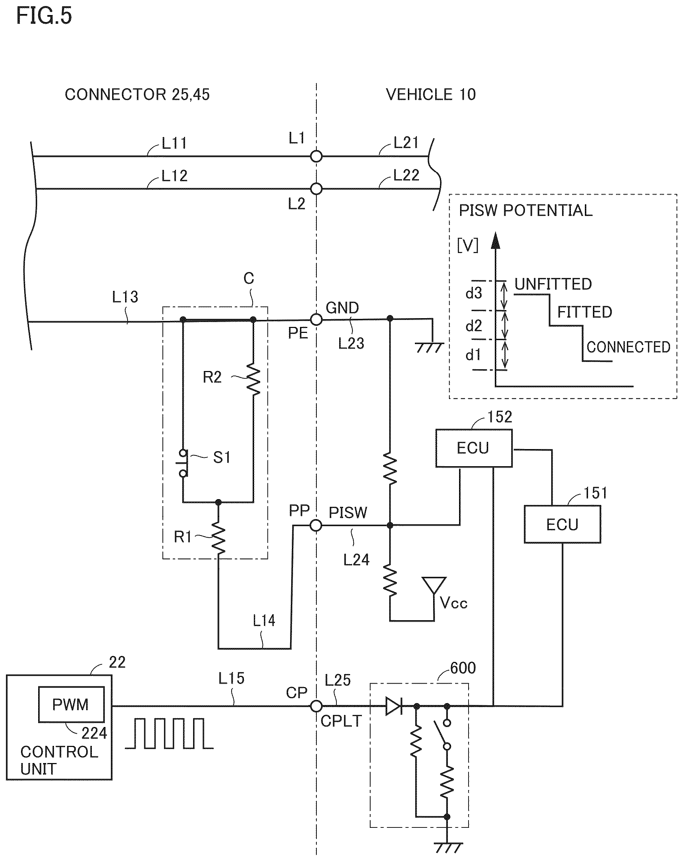

Fig. 5 is a schematic circuit diagram of connector 25, 45 and inlet 12. A power line L11 of connector 25, 45 is connected to a power line L21 of vehicle 10 (inlet 12) via terminal L1. A power line L12 of connector 25, 45 is connected to a power line L22 of vehicle 10 via terminal L2. Power lines L11, L12 are connected to circuit unit 21 in connector 25, and power lines L11, L12 are connected to a circuit unit (not shown) in connector 45. Power lines L21, L22 are connected to battery 11 via charging and discharging circuit 13.

A GND line L13 of connector 25, 45 is connected to a GND line L23 of vehicle 10 via terminal PE. GND line L13 may, for example, be grounded, and in the case of single-phase three-wire AC power, it may be a neutral line. Hereinafter, terminal PE will also be referred to as GND. GND line L23 may be connected to the vehicle body (ground). In vehicle 10, a reference voltage is applied between GND line L23 and a signal line L24, and signal line L24 is connected to terminal PP. Terminal PP inputs a potential signal (PISW signal) indicating the connector state to charging control ECU 152 via signal line L24. Hereinafter, terminal PP will also be referred to as PISW. When connector 25, 45 is electrically connected to inlet 12, the reference voltage supplied from vehicle 10 is applied to terminal PP of connector 25, 45. A closed circuit (PISW circuit) is formed such that PISW is connected to GND via a detection circuit C of connector 25, 45, causing the potential of PISW to change, generating a PISW signal. Charging control ECU 152 can determine the connector state based on the PISW signal (PISW potential).

In vehicle 10, terminal CP (CPLT) is connected to HLC communication ECU 151 and charging control ECU 152 via a signal line L25. Signal line L25 is provided with a CPLT circuit 600. Control unit 22 of DR-compatible EVSE 20 or the control unit of non-DR-compatible EVSE 40 is connected to HLC communication ECU 151 and charging control ECU 152 via a signal line L15, terminal CP, and signal line L25.

Detection circuit C includes electrical resistors R1, R2, and a switch S1. A signal line L14 branches into two branch lines via electrical resistor R1 from PISW, and the branch lines are connected to GND line L13. Electrical resistor R2 is disposed in one of the branch lines, and switch S1 is disposed in the other branch line. Switch S1 opens or closes in conjunction with latch release button 251 of connector 25. Switch S1 enters the closed state (conductive state) when latch release button 251 is not pressed, and enters the open state (interrupted state) when latch release button 251 is pressed. When the user is not operating (not pressing) latch release button 251, switch S1 is in the closed state. Switch S corresponds to a normally-on switch. The same applies to the latch release button of connector 45.

When the user inserts connector 25 into inlet 12 (charging port 123) while pressing latch release button 251, the connector state changes from the unfitted state to the fitted state. When the connector state becomes the fitted state, connector 25 is electrically connected to inlet 12, and PISW is connected to GND via detection circuit C. As a result, the PISW circuit is formed by detection circuit C, and the potential of PISW decreases. Subsequently, when the user releases latch release button 251, the connector state changes from the fitted state to the connected state, and the potential of PISW further decreases. The PISW signals (PISW potentials) in the fitted state and the connected state can be appropriately set based on the values of electrical resistors R1, R2. For example, as surrounded by the dashed line in Fig. 5, when the connector state is the connected state, the PISW potential is set to be within a range d1, and when the connector state is the fitted state, the PISW potential is set to be within a range d2. Additionally, when the PISW potential is within a range d3, it can be detected that the connector state is the unfitted state.

Returning to Fig. 4, in S11, charging control ECU 152 determines whether the PISW signal (PISW potential) is within range d1. When the PISW potential is within range d1, the connector state is the connected state, and accordingly, the determination is positive, and the process proceeds to S11. When the PISW potential is not within range d1, the determination is negative, and the process proceeds to S12.

In S12, the connector state being the connected state is transmitted to server 200 to notify the connection, and the current routine ends.

In S13, it is determined whether connector 25 is inserted into inlet 12 and the connector state is the fitted state. When the PISW signal (PISW potential) is within range d2, the connector state is the fitted state. When the PISW potential is within range d2, charging control ECU 152 makes a positive determination and proceeds to S13. When the PISW potential is not within range d2, charging control ECU 152 makes a negative determination, and the process proceeds to S14.

In S14, the connector state being the fitted state is transmitted to server 200 to notify the fitted state, and the current routine ends.

In S15, it is determined whether connector 25 is removed from inlet 12 and the connector state is the unfitted state. When the PISW signal (PISW potential) is within range d3, the connector state is the unfitted state. When the PISW potential is within range d3, charging control ECU 152 makes a positive determination, and the process proceeds to S16. When the PISW potential is not within range d3, charging control ECU 152 makes a negative determination, and the process proceeds to S17.

In S16, the connector state being the unfitted state is transmitted to server 200 to notify that the connector is unfitted, and the current routine ends.

When the process proceeds to S17, the PISW signal (PISW potential) is not within ranges d1 to d3. This state occurs when the connector inserted into inlet 12 is out of specification or when a device malfunction or the like has occurred. In S17, since the connector inserted into inlet 12 may be out of specification or that a device malfunction or the like may have occurred, the connector state being undetermined is transmitted to the server.

Server 200 can identify vehicle 10 connected to DR-compatible EVSE 20 upon receipt of the connection of the connector state. This allows vehicle 10 that is not connected to DR-compatible EVSE 20 to be excluded from the power adjustment resource targets, and accordingly, a charging and discharging plan can be created relatively accurately. The connector state corresponds to an example of the "fitting information" in the present disclosure.

In the present embodiment, when a predetermined period of time has elapsed since completion of charging, since completion of discharging, and since the connector state entered the unfitted state, charging control ECU 152 enters a sleep state (sleep mode) in order to reduce its power consumption. In the sleep state, for example, an operation of the CPU is stopped.

The connector fitting information notification process shown in Fig. 4 is performed during activation of charging control ECU 152. When charging control ECU 152 is in the sleep state, the connector state cannot be determined, and the connector fitting information is not notified (transmitted) to server 200. When the connector state is the connected state or the fitted state, and when charging control ECU 152 is in the sleep state, the unfitted state cannot be transmitted (notified) to server 200 even when connector 25 is removed from inlet 12 and the connector state becomes the unfitted state. Thus, vehicle 10 that is not connected to DR-compatible EVSE 20 cannot be excluded from the power adjustment resource targets (vehicle 10 that is not connected to DR-compatible EVSE 20 is included in power adjustment resource targets), resulting in a decrease in the accuracy of the created charging and discharging plan.

In the present embodiment, when connector 25 of DR-compatible EVSE 20 is connected to inlet 12, by preferably setting the lock release condition of lock device 300, connector 25 can be prevented from being accidentally removed from inlet 12, and when the connector state becomes the unfitted state, the unfitted state can be transmitted to server 200.

Fig. 6 is a flowchart showing an example lock release condition setting process performed by charging control ECU 152. This flowchart is performed when the connector state changes from the unfitted state to the fitted state. When charging control ECU 152 is in the sleep state, as the range of the PISW signal (PISW potential) changes from range d3 to range d2, charging control ECU 152 is activated, and the process of this flowchart is performed.

In S20, it is determined whether the connector state is the connected state. When the PISW potential is within range d1, it is determined that the connector state is the connected state, and the process proceeds to S21. When the PISW potential is not within range d1, processing of S20 is repeated until the PISW potential falls within range d1.

In S21, advancing/retreating rod 302 of lock device 300 is set at the locked position, and the connector is brought into the locked state.

Subsequently, it is determined in S22 whether or not HLC communication has been established between DR-compatible EVSE 20 or non-DR-compatible EVSE 40 and vehicle 10. When connector 25, 45 is connected to inlet 12 and the connector state becomes the connected state, HLC communication can be performed between control unit 22 and HLC communication ECU 151 via CPLT. For example, when detecting that the connector state has become the connected state based on the PISW potential, charging control ECU 152 connects the switch of CPLT circuit 600. As a result, the potential of signal line L15 decreases. When the potential of signal line L15 has decreased, control unit 22 activates PWM signal generator 224 to generate a PWM signal (CPLT signal). When detecting that the duty ratio of the received PWM signal is a predetermined value, charging control ECU 152 permits HLC communication ECU 151 to perform HLC communication, and the HLC communication is established. When the HLC communication has been established, the determination is positive in S22, and the process proceeds to S23. When the HLC communication has not been established, processing of S22 is repeated until the HLC communication is established.

In S23, it is determined whether the EVSE connected to vehicle 10 is DR-compatible EVSE 20. For example, based on the information (data) on the HLC communication, charging control ECU 152 detects that the EVSE connected to vehicle 10 is DR-compatible EVSE 20. Additionally, based on the information (data) on the HLC communication, charging control ECU 152 detects that the EVSE connected to vehicle 10 is non-DR-compatible EVSE 40. When detecting that that the EVSE connected to vehicle 10 is DR-compatible EVSE 20, charging control ECU 152 makes a positive determination in S23, and the process proceeds to S24. When the EVSE connected to vehicle 10 is not DR-compatible EVSE 20 (for example, when vehicle 10 is connected to non-DR-compatible EVSE 40), charging control ECU 152 makes a negative determination, and the process proceeds to S25.

In S24, the lock release condition of lock device 300 is set to "during user's operation", and the current routine ends. In S25, the lock release condition of lock device 300 is set to "upon completion of charging", and the current routine ends.

When the lock release condition is set to "upon completion of charging", after a lapse of a predetermined period since completion of charging of vehicle 10, advancing/retreating rod 302 of lock device 300 moves to the unlocked position, and lock device 300 enters the unlocked state. As a result, the connector can be removed from inlet 12 upon completion.

When the lock release condition is set to "during user's operation", the locked state is maintained until the user performs an unlock operation. Thus, even after charging and discharging by DR-compatible EVSE 20 is complete, lock device 300 maintains the locked state until the user performs the unlock operation. In the present embodiment, the user performs the unlock operation by operating an unlock button 125 (see Fig. 2) provided in inlet 12. When the user presses unlock button 125, charging control ECU 152 drives actuator 301 and controls advancing/retreating rod 302 to be located at the unlocked position. Additionally, when charging control ECU 152 is in the sleep state, as the user presses unlock button 125, charging control ECU 152 is activated. Then, the activated charging control ECU 152 drives actuator 301 to control advancing/retreating rod 302 to be located at the unlocked position.

The locking/unlocking of lock device 300 is also linked to the operation of a smart key 350. Thus, the user can perform the unlock operation using smart key 350. Referring to Fig. 2, smart key 350 is a portable device carried by the user, which communicates with smart ECU 153 and performs the locking/unlocking of a door of vehicle 10. For example, vehicle 10 (smart ECU 153) transmits a polling signal in the low frequency (LF) band at predetermined intervals. Upon receipt of the polling signal, smart key 350 transmits a response signal in the radio frequency (RF) band. Upon receipt of the response signal, smart ECU 153 performs authentication processing. When authentication is successful and the user performs a predetermined operation (e.g., touching a touch sensor provided in a door knob of vehicle 10), smart ECU 153 unlocks the door and drives actuator 301 to move advancing/retreating rod 302 to the unlocked position. Additionally, as an unlock switch 351 provided in smart key 350 is operated, the door may be unlocked and the locked state of lock device 300 may be released. When charging control ECU 152 is in the sleep mode, as lock device 300 enters the unlocked state using smart key 350, charging control ECU 152 is activated.

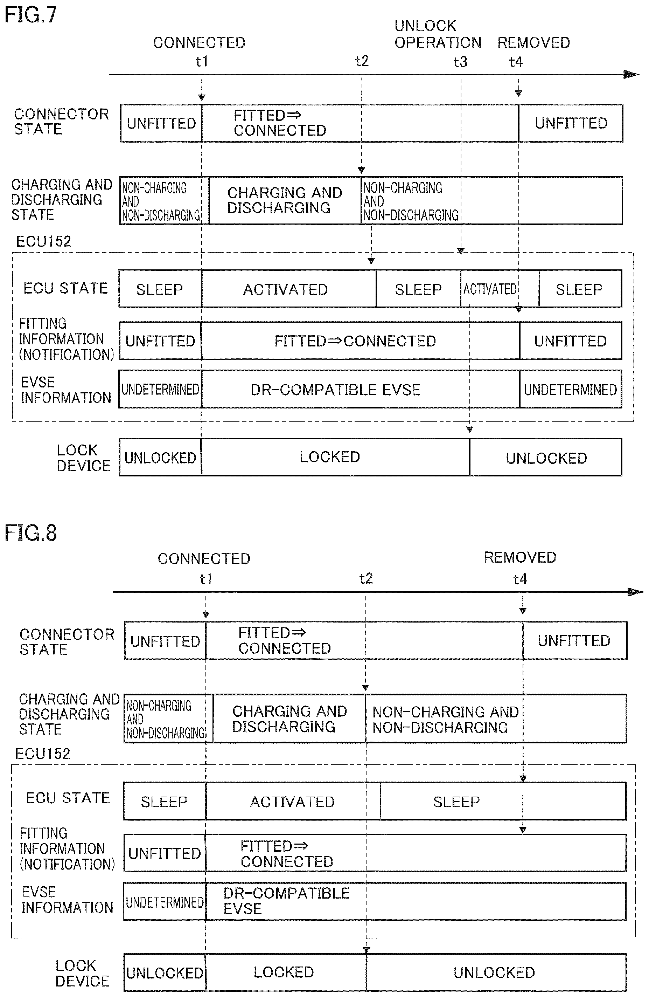

Fig. 7 is a timing chart when DR-compatible EVSE 20 is connected to vehicle 10 in the present embodiment. In this timing chart, when DR-compatible EVSE 20 is connected to vehicle 10, charging or discharging according to the user's needs is performed, and then, they wait for a DR request from server 200. At a time t1, when connector 25 is connected to inlet 12, the connector state changes from the unfitted state to the fitted state, and then to the connected state. Charging control ECU 152, which has been in the sleep state, is activated when the connector state becomes the fitted state (time t1). When charging control ECU 152 is activated, charging control ECU 152 performs the connector fitting information notification process (Fig. 4) and the lock release condition setting process (Fig. 6). Through the connector fitting information notification process, charging control ECU 152 (controller 15) transmits (notifies) the connector state to server 200. As a result, the fitting information indicates the fitted state at time t1, and then the connected state. At a time prior to time t1, the unfitted state previously transmitted to server 200 is maintained.

At time t1, when charging control ECU 152 is activated, the lock release condition setting process (Fig. 6) is performed. Since DR-compatible EVSE 20 is connected to vehicle 10, the EVSE information indicates DR-compatible EVSE. Additionally, the lock release condition is set to "during user's operation".

Lock device 300 changes from the unlocked state to the locked state at time t1 at which connector 25 is connected to inlet 12. Since the lock release condition is set to "during user's operation", connector 25 cannot be removed from inlet 12 until the lock release operation is performed by the user.

At time t1, when connector 25 is connected to inlet 12 and preparations are complete, charging or discharging is performed, and at a time t2, charging or discharging is complete. When charging or discharging is complete, charging control ECU 152 enters the sleep state after a lapse of a predetermined time.

After charging control ECU 152 has entered the sleep state, at a time t3, when the user operates unlock button 125 or uses smart key 350 to perform the lock release operation (unlock operation), lock device 300 enters the unlocked state. Through this unlock operation, charging control ECU 152 is activated from the sleep state.

After the user's unlock operation, charging control ECU 152 has been activated, and thus, when connector 25 is removed from inlet 12 at a time t4, charging control ECU 152 notifies (transmits), to server 200, that the connector state is the unfitted state by the connector fitting information notification process (Fig. 4). As a result, server 200 can exclude vehicle 10, which is not connected to DR-compatible EVSE 20, from the power adjustment resource targets.

Fig. 8 is a timing chart when DR-compatible EVSE 20 is connected to vehicle 10 in a comparative example. In the comparative example, the lock release condition is set to "upon completion of charging and discharging".

As in the timing chart of Fig. 7, when connector 25 is connected to inlet 12 at time t1, the connector state changes from the unfitted state to the fitted state, and then to the connected state. Charging control ECU 152, which has been in the sleep state, is activated when the connector state becomes the fitted state. The activated charging control ECU 152 performs the connector fitting information notification process (Fig. 4). Through the connector fitting information notification process, charging control ECU 152 (controller 15) transmits (notifies) the connector state to server 200. As a result, the fitting information indicates the fitted state at time t 1, and then the connected state.

Since vehicle 10 is connected with DR-compatible EVSE 20, the EVSE information indicates the DR-compatible EVSE. In the comparative example, the lock release condition is set to "upon completion of charging and discharging".

Lock device 300 changes from the unlocked state to the locked state at time t1 at which connector 25 is connected to inlet 12. Since the lock release condition is set to "upon completion of charging and discharging", upon completion of charging and discharging, lock device 300 changes from the locked state to the unlocked state.

At time t1, when connector 25 is connected to inlet 12 and preparations are complete, charging or discharging is performed, and at time t2, charging or discharging is complete. When charging or discharging is complete, after a lapse of a predetermined period of time, charging control ECU 152 enters the sleep state.

Lock device 300 enters the unlocked state at time t2, and thus, connector 25 can be removed from inlet 12 at time t4. When connector 25 is removed from inlet 12, charging control ECU 152, which is in the sleep state, cannot perform the connector fitting information notification process and cannot transmit (notify) the connector state to server 200. Thus, in the comparative example, when connector 25 is removed from inlet 12 at time t4, server 200 cannot exclude vehicle 10, which is not connected to DR-compatible EVSE 20, from the power adjustment resource targets.

According to the above embodiment, lock device 300 enters the locked state when connector 25, 45 of the EVSE is fitted with inlet 12 of vehicle 10. When the EVSE is non-DR-compatible EVSE 40 that does not use vehicle 10 as a power adjustment resource, controller 15 (charging control ECU 152) releases the locked state of lock device 300 upon completion of charging of battery 11 by non-DR-compatible EVSE 40. When the EVSE is DR-compatible EVSE 20 that uses vehicle 10 as a power adjustment resource, after completion of charging of battery 11 by DR-compatible EVSE 20 or after completion of discharging of battery 11, controller 15 maintains the locked state of lock device 300 until the lock release operation is performed by the user.

When vehicle 10 is connected to non-DR-compatible EVSE 40, the locked state is released upon completion of charging, and thus, the user can remove connector 45 from inlet 12 without performing the lock release operation, leading to improved convenience. When vehicle 10 is connected to DR-compatible EVSE 20, after completion of charging or after completion of discharging, the locked state is maintained until the user performs the lock release operation. Consequently, connector 25 can be prevented from being accidentally removed from inlet 12, thereby increasing a possibility that vehicle 10 will be used as a power adjustment resource. Thus, both convenience and adjustment capability can be achieved.

According to the above embodiment, controller 15 sets the lock release condition to "upon completion of charging" when vehicle 10 is connected to non-DR-compatible EVSE 40, and sets the lock release condition to "during user's operation" when vehicle 10 is connected to DR-compatible EVSE 20. As a result, when vehicle 10 is connected to non-DR-compatible EVSE 40, the locked state is released upon completion of charging. Thus, the user can remove connector 45 from inlet 12 without performing the lock release operation, leading to improved convenience. Additionally, when vehicle 10 is connected to DR-compatible EVSE 20, after completion of charging or after completion of discharging, the locked state is maintained until the user performs the lock release operation. Consequently, connector 25 can be prevented from being accidentally removed from inlet 12, thereby increasing a possibility that vehicle 10 will be used as a power adjustment resource. Thus, both convenience and adjustment capability can be achieved.

According to the above embodiment, when the EVSE connected to vehicle 10 is DR-compatible EVSE 20, controller 15 notifies server 200, which creates a charging and discharging plan based on power adjustment, of the fitting information on fitting between connector 25 and inlet 12. This enables server 200 to identify a vehicle connected to DR-compatible EVSE 20.

According to the above embodiment, when DR-compatible EVSE 20 is connected, when connector 25 is removed from inlet 12 to enter the unfitted state, controller 15 notifies server 200 of the unfitted state. When connector 25 is removed from inlet 12 to enter the unfitted state, server 200 receives the notification, and thus, when creating the charging and discharging plan, can exclude vehicle 10 that is not connected to DR-compatible EVSE 20 from the power adjustment resource targets and create the charging and discharging plan.

According to the above embodiment, charging control ECU 152 enters the sleep state after completion of charging and after completion of discharging. This can reduce the amount of power consumption of charging control ECU 152. Charging control ECU 152 is activated when the locked state is released by the user's lock release operation in the sleep state. As a result, charging control ECU 152 is activated from the sleep state when the locked state is released by the user's lock release operation, and thus, can detect that connector 25 has been removed from inlet 12 and has entered the unfitted state, and notify server 200 of the unfitted state. Thus, server 200 can exclude vehicle 10, which is not connected to DR-compatible EVSE 20, from the power adjustment resource targets when creating a charging and discharging plan, and can preferably create the charging and discharging plan.

In the above embodiment, controller 15 (charging control ECU 152) of vehicle 10 transmits (notifies) the fitting information (connector state) to server 200. However, the fitting information may also be transmitted from control unit 22 of DR-compatible EVSE 20 to server 200. This allows the fitting information (connector state) to be notified using communication between server 200 and DR-compatible EVSE 20.

In the above embodiment, when a predetermined period of time has elapsed since completion of charging, since completion of discharging, and since the connector state entered the unfitted state, charging control ECU 152 enters the sleep state (sleep mode) in order to reduce its power consumption. Further, if charging or discharging does not start even after a lapse of a predetermined period of time since connection of connector 25, 45 to inlet 12, charging control ECU 152 may enter the sleep state. In this case, when charging or discharging starts due to timer charging or in response to a DR request, charging control ECU 152 is activated.

In the above embodiment, the EVSE and vehicle 10 perform HLC communication using a signal superimposed on the CPLT signal. However, communication may be performed between the EVSE and vehicle 10 using controller area network (CAN) communication, power line communications (PLC), or the like.

In the above embodiment, lock device 300 enters the locked state in which the connector cannot be removed from inlet 12 as advancing/retreating rod 302 abuts on latch 252. However, the locking mechanism of the lock device may have any configuration. For example, the locked state may be formed as the advancing/retreating rod of the lock device engages with a recess provided in the connector.

Although the embodiment of the present disclosure has been described, it should be understood that the present embodiment disclosed herein is illustrative and non-restrictive in every respect. The scope of the present disclosure is defined by the terms of the claims and is intended to include any modifications within the scope and meaning equivalent to the terms of the claims.

## Claims

1. A vehicle (10) including a power storage device (11), the vehicle comprising:
an inlet (12) connectable with a connector (25, 45) of a power feeding facility (20, 40);
a lock device (300) that brings, when the connector is fitted with the inlet, the connector into a locked state in which the connector is unable to be removed from the inlet; and
a controller (15), wherein
when the power feeding facility is a first power feeding facility (40) that does not use the vehicle as a power adjustment resource, the controller releases the locked state upon completion of charging of the power storage device by the power feeding facility, and
when the power feeding facility is a second power feeding facility (20) that uses the vehicle as a power adjustment resource, after completion of the charging of the power storage device by the power feeding facility or after completion of discharging of the power storage device, the controller maintains the locked state until a lock release operation is performed by a user.

2. The vehicle according to claim 1, wherein when the power feeding facility is the second power feeding facility, the controller notifies a server (200) of fitting information on fitting between the connector and the inlet, the server creating a charging and discharging plan based on power adjustment.

3. The vehicle according to claim 2, wherein when the connector is removed from the inlet to enter an unfitted state, the controller provides a notification of the unfitted state.

4. The vehicle according to claim 2 or 3, wherein
the controller enters a sleep state after completion of the charging and after completion of the discharging, and
the controller is activated when the locked state is released by the lock release operation in the sleep state.

5. The vehicle according to claim 4, wherein the controller notifies the server of the fitting information via the second power feeding facility.
